# EUROPÄISCHE PATENTSCHRIFT

(11) **EP 2 197 202 B1**
(45) Veröffentlichungstag und Bekanntmachung des Hinweises auf die Patenterteilung: **28.09.2016**
(21) Anmeldenummer: 08171233.3
(22) Anmeldetag: 10.12.2008
(51) Int. Cl.: H04N 5/445

(54) **Verfahren und Vorrichtung zur Datenverarbeitung sowie die Vorrichtung umfassendes System**
Method and device for processing data and system comprising the device
Procédé et dispositif destinés au traitement de données et système comprenant ce dispositif

(43) Veröffentlichungstag der Anmeldung: 16.06.2010
(73) Patentinhaber: Nokia Solutions and Networks Oy, 02610 Espoo (FI)
(72) Erfinder: Krupp, Johannes, 83043, Bad Aibling (DE)
(74) Vertreter: Borgström, Markus

(56) Entgegenhaltungen:
- US-A1- 2008 127 257
- US-A1- 2008 139 193
- US-A1- 2008 155 607

## Beschreibung

Die Erfindung betrifft ein Verfahren und eine Vorrichtung zur Datenverarbeitung sowie ein die Vorrichtung umfassendes System.

Fernseh- und Rundfunkprogramme werden zunehmend über eine Mehrzahl von Verteilwegen angeboten. So findet sich die Bereitstellung derartiger Programmangebote über terrestrisches Antennensignal, aber auch über Kabelnetze, Satellitensysteme, das Internet und Kommunikationsnetze, wie insbesondere Mobilfunknetze.

**Aus der Publikation** US 2008/127257 A1 (Kvache), 29. Mai 2008 **(2008-05-29), sind ein System und Verfahren bekannt zur Bereitstellung eines interaktiven Programmführers (IPG). Das System schließt generell eine Netzkomponente ein, welche IPG Daten inklusive Programmdaten empfängt, sowie eine Mobilgeräteanwendungskomponente, welche Programmdaten von der Netzkomponente empfängt und die Programmdaten zur Anzeige auf dem Mobilgerät bringt.**

Über diese neuen Verteilwege werden allgemeiner Multimediadienste unterstützt, die neben Fernseh- und Audioprogrammen, beispielsweise auch Video auf Anforderung, Audio auf Anforderung, Spiele, Texte, Bilder, Daten und Internetzugriff umfassen können.

So erfolgt beispielsweise mit IPTV (Internet Protokoll Fernsehen) die digitale Übertragung von breitbandigen Anwendungen, wie Fernsehprogrammen und Filmen, über ein digitales Datennetz. Hierzu wird das auch dem Internet zugrunde liegende Internet Protocol (IP) verwendet. Typischerweise wird beim IPTV von einem Telekommunikations-Anbieter einem bestimmten Nutzerkreis, den Abonnenten oder Teilnehmern, ein festes Programmangebot mit definierter Qualität über ein Breitbandnetz zur Verfügung stellt. IPTV benötigt i. a. aus technischen Gründen ein geeignetes und vom IPTV Anbieter zugelassenes Endgerät beim Teilnehmer. Das Endgerät empfängt Datenströme über eine Internetanbindung, z.B. eine DSL basierte Anbindung, es teilt diese Datenströme in Teilströme auf (Audio, Video, Daten etc.), dekodiert und liefert i. a. ein Bild- und Audiosignal an eine integrierte oder externe Video-Audio-Ausgabeeinheit. Als Endgeräte stehen insbesondere beispielsweise Set Top Boxen (STB), Fernsehgeräte (TV), Personal Computer (PC) und Mobilfunkgeräte zur Verfügung. Zur lung der ein jeweiliges IPTV Angebot betreffenden Multimediadienste sind seitens des Anbieters u. a. Komponenten zur Steuerung, Lastverteilung und Zugangskontrolle, zur Einspeisung von Fernsehprogrammen (TV headend) in das Breitbandnetz, zur Bereitstellung von Video/Audio Inhalten auf Abruf (VoD Server), zur Aufzeichnung von Inhalten (PVRs), zur Übertragung per Streaming und/oder Download, sowie zur Verschlüsselung der zu übertragenden Inhalte vorhanden.

Zur einfachen Handhabung des Programmangebots steht dem Teilnehmer Programminformation in Form einer elektronischen Programmzeitschrift zur Verfügung, üblicherweise als Electronic Program Guide (EPG) bezeichnet. Diese Programminformation wird dem Teilnehmer mit einem Inhalt, z.B. im Rahmen der Übertragung eines DVB Signals, oder separat von der Übertragung eines Inhalts verfügbar gemacht.

Neben auf einem Festnetz basierten IPTV Netzlösungen gibt es insbesondere für Mobilfunknetze geeignete Netzlösungen für Mobilfernsehen, die typischerweise zum Beispiel von Mobilfunknetzbetreibern angeboten werden. Derartige Lösungen benötigen anbieterseitig ähnliche Komponenten, wie bereits voranstehend erwähnt, verwenden jedoch bedingt durch andere Technologie abweichende Konzepte und Standards. Insbesondere sind beispielsweise die Kodierung der Nutzsignale (z.B. UMTS, MBMS, DVB-H) und die Funktionalität der Endgeräte (z.B. Displaygröße, lokale Verarbeitungsleistung, lokaler Speicher, Übertragungsbandbreite) verschieden von den für ein Festnetz eingesetzten IPTV Lösungen.

Hierbei ist es von Nachteil, dass die Programminformationen über mehrere unterschiedliche Netzlösungen hinweg nicht automatisch konsistent sind.

Die **Aufgabe** der Erfindung besteht darin, den vorstehend genannten Nachteil zu vermeiden und insbesondere sicherzustellen, dass die Verfügbarkeit von konsistenter Programminformation für die Teilnehmer über mehrere Systeme zur Bereitstellung von Programminformation hinweg effizient und zuverlässig erreicht wird.

Die Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Datenverarbeitung angegeben,
- bei dem ein erstes System eine erste Programminformation bereitstellt,
- bei dem die erste Programminformation auch für mindestens ein erstes Endgerät bereitgestellt wird,
- bei dem eine zweite Programminformation anhand der ersten Programminformation ermittelt wird,
- bei dem die zweite Programminformation für ein zweites System bereitgestellt wird,
- wobei das zweite System mindestens eine Funktion zur Bereitstellung der zweiten Programminformation für mindestens ein zweites Endgerät aufweist.

Hierbei ist es vorteilhaft, dass die zweite Programminformation aus der ersten Programminformation ohne Zutun eines Bedieners automatisch ermittelt werden kann, womit Konsistenz beider Programminformationen gegeben ist und die Wahrscheinlichkeit von Fehlern durch Wegfall von Bedieneraktionen verringert wird.

Auch kann die Bereitstellung der ermittelten zweiten Programminformation an das zweite System automatisch erfolgen, welches mindestens eine Funktion besitzt, die ermittelte zweite Programminformation für ein zweites Endgerät bereitzustellen. Mithin ergibt sich der Vorteil, dass es keines Bedienereingriffs zur Bereitstellung der zweiten Programminformation für ein zweites System zur Bereitstellung der zweiten Programminformation bedarf.

Schließlich wird eine zeitnahe Bereitstellung der zweiten Programminformation ermöglicht, da die Ermittlung und Bereitstellung der zweiten Programminformation nur die Bereitstellung oder Verfügbarkeit der ersten Programminformation voraussetzt und sich dieser unmittelbar anschließen kann.

Das erste System und das zweite System können hierbei jeweils ein System umfassen, welches Multimediadienste über eine geeignete Netzinfrastruktur bereitstellt, zum Beispiel ein Festnetz, ein Mobilfunknetz, ein terrestrisches und/oder ein Satelliten-gestütztes Verteilnetz, ein Kommunikationsnetz oder ein hybrides Netz mit mindestens einem der vorgenannten Netze. Neben der Bereitstellung und/oder der Steuerung der Bereitstellung eines Programmangebots können das erste und das zweite System zugleich auch die Bereitstellung der ersten bzw. der zweiten Programminformation übernehmen. Es ist jedoch ebenfalls möglich, dass das erste und /oder das zweite System von den Verteilungs- und Steuerungsfunktionen getrennte Systeme zur reinen Bereitstellung von Programminformation sind.

Die Bereitstellung der ersten und / oder der zweiten Programminformation kann eine Bereitstellung auf Anforderung, insbesondere auch durch das mindestens eine erste Endgerät bzw. durch das zweite System sein. Die Bereitstellung kann aber ebenfalls jeweils ohne Anforderung erfolgen, also freilaufend bei Verfügbarkeit, bei teilweisem oder vollständigem Vorhandensein der bereitzustellenden Programminformation oder bei Eintritt eines Ereignisses, z.B. einer Zeitbedingung, einer Lastbedingung einer Netzkomponente oder eines Last- und/oder Verfügbarkeitszustands eines Netzes. Eine derartige Bedingung kann insbesondere das Erreichen eines Zeitpunktes sein, eine Wiederverfügbarkeit einer Netzkomponente oder eines Endgeräts, das Einschalten eines Endgeräts oder der Abbau eines Überlastzustands in einem Netz oder in einer Netzkomponente.

Auch eine gemischte Bereitstellung ohne und mit Anforderung kann zufällig oder nach festgelegten, z.B. flexibel änderbaren Kriterien erfolgen. Im Zuge der Bereitstellung kann eine Übertragung der ersten bzw. der zweiten Programminformation oder von Teilen davon erfolgen. Einer solchen Übertragung können ein Empfang und eine Verarbeitung und damit eine Versorgung mit der ersten bzw. der zweiten Programminformation folgen.

Die erste und die zweite Programminformation können jeweils für den Teilnehmer, z.B. den Nutzer eines ersten und/oder zweiten Endgeräts sichtbare Informationen umfassen.

Eine Weiterbildung ist es, dass die erste Programminformation und die zweite Programminformation jeweils nicht zur Anzeige bestimmte Information umfassen.

Eine für den Nutzer nicht sichtbare Information umfasst hierbei beispielsweise die zur Bereitstellung eines aus der Programminformation heraus ausgewählten Inhalts notwendige Identifizierungs- und / oder Zugriffsinformation. Auch können Verknüpfungen mit Inhalten, welche sich außerhalb der ersten bzw. zweiten Programminformation befinden bzw. nicht zu diesen gehören, nicht zur Anzeige gelangen.

Ferner können die erste Programminformation und die zweite Programminformation mindestens eine der folgenden Informationen umfassen:
- eine Kanal-Identifizierungsnummer;
- eine Kanal-Nummer;
- eine Kanal-Adresse;
- ein Kanal-Name;
- einen Programm-Namen;
- einen Namen einer Video/Audio-Kategorie;
- eine Rating Informationen;
- eine Jugendschutzinformation;
- eine Startzeit;
- eine Endzeit;
- eine Zeitdauer;
- eine Längenangabe;
- einen Speicherplatzbedarf;
- eine Dauer einer Verfügbarkeit;
- eine Kosteninformation;
- eine Nutzungsinformation;
- eine Nutzungsbeschränkungsinformation;
- eine Kurzbeschreibung;
- eine Verknüpfung zu einem Inhalt des Internets;
- einen Link zu einem auf einem Web-Server hinterlegten Inhalt;
- eine bildliche Darstellung, insbesondere eine Folge bildlicher Darstellungen;
- eine Folge von Frames zu einem audiovisuellen oder multimedialen Inhalt;
- eine Vorschau;
- ein Ausschnitt aus einem audiovisuellen oder multimedialen Inhalt;
- eine Folge von Ausschnitten aus einem audiovisuellen oder multimedialen Inhalt;
- eine Qualitätsinformation;
- eine Kodierungsinformation;
- eine Unicast oder eine Multicast Adresse;
- eine Frequenzinformation;
- einen Übertragungsparameter;
- eine Information betreffend einen Übertragungspartner;
- eine Information betreffend eine Bereitstellung eines audiovisuellen oder multimedialen Inhalts insbesondere via Streaming, Download oder einer Kombination aus Streaming und Download.

Die erste und die zweite Programminformation können jeweils insbesondere Fernseh- oder Hörfunkprogramme betreffen, die mit Kanalnummer und Kanalname z.B. horizontal und/oder vertikal zur Anzeige gebracht werden. In gleicher Weise können auf Anforderung eines einzelnen Teilnehmers abrufbare multimediale Inhalte, Spielfilme, Video Clips, Aufzeichnungen und Mitschnitte, Audio-Inhalte linear, in einer Verzeichnisstruktur, in Ebenen und/oder nach Themen geordnet, Teil der Programminformation sein. Auch Internet-Seiten oder Walled-Garden-Seiten können Teil der ersten und zweiten Programminformation sein. Ein Eintrag in der Programminformation kann mit Bildmaterial oder Bild- und Tonmaterial angereichert sein. Insbesondere können ein festes Bild, ein bewegtes Bild oder aktuelles Live-Signal eines Kanals, oder jeweils ein Link oder ein Verweis auf eine solche Information oder eine Verknüpfung mit einer solchen Information Teil der ersten und / oder der zweiten Programminformation sein. Insbesondere können die erste Programminformation oder die zweite Programminformation jeweils ein Electronic Program Guide (EPG) sein.

Eine andere Weiterbildung ist es, dass die zweite Programminformation mindestens einem weiteren Endgerät bereitgestellt wird, wobei das zweite System das mindestens eine weitere Endgerät umfasst.

Hiermit ist es von Vorteil, dass das weitere Endgerät die zweite Programminformation direkt und unter Umgehung und Nichtverwendung der Bereitstellungsfunktionalität des zweiten Systems erhalten kann. Für das weitere Endgerät ergibt sich die Freiheit, dass es nicht zwangsweise ein Endgerät in einem bestimmten System zur Bereitstellung von Multimediadiensten sein muss und/oder dass es nicht die zweite Programminformation ggf. von einem diesem System zugeordneten System zur Bereitstellung von zweiten Programminformationen beziehen muss. Ein Teilnehmer mit Zugang zu dem mindestens einen weiteren Endgerät kann sich einen Multimediadienstanbieter frei wählen. Ebenso ist es möglich, dass ein Endgerät sich sowohl in der Rolle eines zweiten Endgeräts als auch in der Rolle eines weiteren Endgeräts befindet, womit sich der Vorteil besonders hoher Verfügbarkeit der zweiten Programminformation auch im Falle von Fehlern und Lastzuständen ergibt.

Insbesondere ist es eine Weiterbildung, dass eine zweite Kennung von dem mindestens einen weiteren Endgerät bereitgestellt wird.

Hiermit ist der Vorteil verbunden, dass auf Basis der zweiten Kennung eine Authentifizierung möglich ist, die es ermöglicht, eine unberechtigte Bereitstellung der zweiten Programminformation zu verhindern oder zu unterbinden. Die zweite Kennung kann sowohl zur Identifikation eines Teilnehmers an dem mindestens einen weiteren Endgerät oder zur Identifikation des mindestens einen weiteren Endgeräts benutzt werden.
Die Bereitstellung und/oder Übertragung der zweiten Kennung kann vor oder mit, während oder im Rahmen der Bereitstellung der zweiten Programminformation erfolgen.

Die zweite Kennung kann vorteilhaft auch mit einer bereits aus anderen Gründen vorhandenen Kennung identisch sein. So kann beispielsweise im Falle von Endgeräten eines Mobilfunknetzes die Rufnummer eines Teilnehmers MSISDN (Mobile Subscriber Integrated Digital Services Network Number) als eine zweite Kennung benutzt werden.

Auch ist es eine Weiterbildung, dass die zweite Programminformation anhand der zweiten Kennung bereitgestellt wird.

Hierbei ist es z.B. von Vorteil, dass dem mindestens einen weiteren Endgerät eine zweite Programminformation spezifisch bereitgestellt werden kann. Das mindestens eine weitere Endgerät kann hierdurch eine für seine Bedürfnisse angepasste zweite Programminformation erhalten, die automatisch bei Verfügbarkeit einer ersten Programminformation zugreifbar wird. Zwei verschiedene weitere Endgeräte können individuelle Versionen der zweiten Programminformation erhalten. Diese Versionen können ggf. abweichen von der Version der zweiten Programminformation, die die mindestens eine Funktion des zweiten Systems zur Bereitstellung der zweiten Programminformation erhält.

Ferner ist es eine Weiterbildung, dass die zweite Programminformation mittels spezifischer Regeln für das mindestens eine weitere Endgerät ermittelt wird, wobei die spezifischen Regeln insbesondere vorgegeben, konfiguriert und/oder mittels Nachrichtenaustauschs mit dem mindestens einen weiteren Endgerät festgelegt, generiert, gelöscht oder verändert werden.

Hiermit ergibt sich der Vorteil, dass die zweite Programminformation sowohl an die Bedürfnisse des mindestens einen weiteren Endgeräts und/oder an die des Nutzers des mindestens einen weiteren Endgeräts angepasst werden kann. So können beispielsweise den Nutzer nicht interessierende Informationen in der zweiten Programminformation ausgeblendet sein. Auch kann eine Vielzahl von Informationen in Form der zweiten Programminformation vorliegen, die eine übersichtliche Ausgabe an der Anzeigevorrichtung (Display) des Endgerätetyps des mindestens einen weiteren Endgeräts erlauben.

Insbesondere ist es vorteilhaft, dass die Regeln der Ermittlung der zweiten Programminformation durch eine Interkommunikation mit dem mindestens einen weiteren Endgerät bestimmt bzw. festgelegt werden können. So kann ein Teilnehmer an dem mindestens einen weiteren Endgerät beispielsweise nur an individuell favorisierten Programmkanälen und Videokategorien interessiert sein. Bei geändertem Interesse kann eine eine Änderung betreffende Kommunikation des mindestens einen weiteren Endgeräts dazu benutzt werden, zukünftig weitere oder andere Informationen in Form der zweiten Programminformation bereitgestellt zu bekommen. Eine eine solche Änderung berücksichtigende Bereitstellung der zweiten Programminformation kann unmittelbar oder zeitversetzt, z.B. bei Vorliegen eines definierten Ereignisses, nach einer solchen Kommunikation erfolgen.

Es ist eine zusätzliche Weiterbildung, dass
- eine erste Nachricht des mindestens einen weiteren Endgeräts empfangen wird;
- ein erstes Informationselement der zweiten Programminformation aufgrund des Erhalts der ersten Nachricht markiert wird;
- das erste Informationselement mit einem ersten Inhaltselement assoziiert ist;
- das erste Inhaltselement mit einem Zeitpunkt assoziiert ist;
- eine zweite Nachricht an das mindestens eine weitere Endgerät übertragen wird bei Erreichen des Zeitpunkts oder bei Annäherung an den Zeitpunkt.

Hiermit ergibt sich der Vorteil, dass ein Teilnehmer im Rahmen der dem mindestens einen weiteren Endgerät bereitgestellten zweiten Programminformation einen an einen Zeitpunkt gebundenen Inhalt besonderer individueller Relevanz festlegen kann, an welchen er rechtzeitig erinnert wird. Hierbei ist es möglich, dass der Teilnehmer bei Beginn der Verfügbarkeit des Inhalts oder ggf. hinreichend lange zuvor durch eine erinnernde zweite Nachricht an das mindestens eine weitere Endgerät informiert wird.

So ist es möglich, dass ein Teilnehmer eine solche zweite Nachricht beispielsweise über sein Mobilfunkgerät, also sein mobiles Telefon oder Handy, erhält bei Beginn einer ihn interessierenden Übertragung einer Sportveranstaltung, die er dann auf seinem mobilen oder einem nicht mobilen Endgerät verfolgen kann.

Die zweite Nachricht kann eine beliebige, dem weiteren Endgerät übertragbare Nachricht sein, wobei die zweite Nachricht beispielsweise insbesondere eine SMS-Nachricht, eine MMS Nachricht, ein Audio- oder Videoanruf, ein Klingelton, eine Ausgabe auf einem Display, eine Ansage, eine Video-Botschaft, ein Video-Clip oder eine Instant Message umfassen kann.

Das erste Informationselement der zweiten Programminformation kann typischerweise eine Repräsentation oder eine beschreibende Darstellung des ersten Inhaltselements sein.

Erste Inhaltselemente können hierbei beispielsweise eine Fernsehsendung, eine Hörfunksendung, ein mittels einer Punktzu-Mehrpunkt-Verbindung und/oder auf eine Anforderung hin verfügbarer multimedialer, insbesondere ein audiovisueller Inhalt, ein Video-on-Demand (VoD) Inhalt, ein Video Clip, eine Bildaufzeichnung, eine Tonaufzeichnung und/oder ein per Internet Protocol zugreifbarer Inhalt sein.

Das erste Informationselement kann insbesondere ein Element einer kanalbasierten Inhaltsdarstellung der zweiten Programminformation sein, dem beispielsweise ein Anfangszeitpunkt und ein Endzeitpunkt sowie ggf. ein Titel zugeordnet sind. Das erste Informationselement kann ebenfalls eine eine Fernsehsendung oder Hörfunksendung beschreibende Informationsseite, oder eine Mehrzahl derartiger Seiten umfassen.

Eine Markierung des ersten Informationselementes kann hierbei in der zweiten Programminformation, auf deren Basis sie vorgenommen wird, für den Teilnehmer sichtbar sein. Die Markierung kann durch den Benutzer ebenfalls verändert und gelöscht werden. Die Markierung kann sich automatisch bei der Ermittlung der zweiten Programminformation auf weitere erste Informationselemente der zweiten Programminformation erstrecken, die das gleiche erste Inhaltselement betreffen.

Eine gleichzeitig vorhandene Markierung einer Mehrzahl von Informationselementen, die mit unterschiedlichen Inhaltelementen assoziiert sind, ist ebenfalls möglich. Umfasst die zweite Programminformation eine Mehrzahl zusammengehöriger erster Informationselemente, deren Zusammengehörigkeit sich aus der Assoziiertheit mit zusammengehörigen ersten Inhaltselementen ergibt, kann bereits mit einer einzigen ersten Nachricht eine Markierung von mehreren ersten Informationselementen erfolgen. Hierbei kann für jedes der zusammengehörigen ersten Inhaltselemente jeweils mindestens ein zu diesem assoziiertes erstes Informationselement markiert werden. Hiermit ergibt sich der Vorteil, dass mit einer einzigen ersten Nachricht bzw. aufgrund einer einzigen Bedienaktion des Nutzers, welche zur Bereitstellung dieser ersten Nachricht führt, beispielsweise alle in der zweiten Programminformation enthaltenen Teile einer Fernsehserie markiert werden können. Derartige Markierungen können bei Aktualisierungen der zweiten Programminformation erhalten bleiben bzw. werden automatisch auf Serienelemente eines eventuell in der Aktualisierung enthaltenen nachfolgenden Zeitraums ausgedehnt. Letztere Funktionalität kann Bestandteil der Ermittlung der zweiten Programminformation sein.

Schließlich kann eine Benachrichtigung mittels einer zweiten Nachricht ebenso nach einer definierten Überschreitung des mit dem ersten Inhaltselement assoziierten Zeitpunktes erfolgen. Damit ist auch eine Benachrichtigung bei Überschreitung des Zeitpunkts z.B. um eine gewisse Zeitspanne möglich. Dies ist zum Beispiel vorteilhaft, falls der Nutzer nur an einem gewissen Teil des Programms, etwa an einer zweiten Halbzeit eines Fußballspiels, interessiert ist.

Eine nächste Weiterbildung besteht darin, dass eine erste Kennung von dem mindestens einen ersten Endgerät dem ersten System bereitgestellt wird.

Dies hat u.a. den Vorteil, dass auf Basis der ersten Kennung eine Authentifizierung möglich ist, die es erlaubt, eine unberechtigte Bereitstellung der ersten Programminformation zu verhindern oder zu unterbinden. Die erste Kennung kann sowohl zur Identifikation eines Teilnehmers an dem mindestens einen ersten Endgerät als auch zur Identifikation des mindestens einen ersten Endgeräts benutzt werden. Dasselbe gilt für die Bereitstellung der ersten Programminformation für Geräte, die von ersten Endgeräten verschieden sind. Die Bereitstellung und/oder Übertragung der ersten Kennung kann vor oder mit, während oder im Rahmen der Bereitstellung der ersten Programminformation erfolgen. Als erste Kennung kann beispielsweise die MAC-Adresse (Media Access Control Adresse) eines für IPTV geeigneten Endgerätes dienen. Zur Identifikation kann alternativ oder zusätzlich ein Passwort genutzt werden.

Eine Ausgestaltung ist es, dass die erste Programminformation anhand der ersten Kennung bereitgestellt wird.

Somit kann dem mindestens einen ersten Endgerät eine erste Programminformation spezifisch bereitgestellt werden. Das mindestens eine erste Endgerät kann eine für seine Bedürfnisse angepasste erste Programminformation erhalten, die mit der Bereitstellung der ersten Programminformation zugreifbar wird. Zwei verschiedene erste Endgeräte können individuelle Versionen der ersten Programminformation erhalten.

Ein Vorteil besteht auch darin, dass von ersten Endgeräten verschiedenen Geräten, denen die erste Programminformation bereitgestellt wird, insbesondere auf gleichem Wege eine erste Programminformation spezifisch bereitgestellt werden kann.

Im Hinblick auf die vorstehend genannte zweite Kennung besteht ebenfalls die Möglichkeit einer Zuordnung zwischen einer ersten Kennung und einer zweiten Kennung sowie die Möglichkeit einer Zuordnung einer ersten Kennung und einer Mehrzahl zweiter Kennungen. Vorteilhaft kann somit im Hinblick auf die Ermittlung der zweiten Programminformation bereits auf die Bereitstellung einer besonders geeigneten ersten Programminformation zugegriffen werden. Die besonders geeignete erste Programminformation kann die Ermittlung der jeweils gewünschten zweiten Programminformation erleichtern und/oder vereinfachen.

Eine alternative Ausführungsform besteht darin, dass die zweite Programminformation ermittelt wird, indem mindestens ein zweites Informationselement der zweiten Programminformation ermittelt wird, wobei das mindestens eine zweite Informationselement mit einem zweiten Inhaltselement assoziiert ist, wobei das zweite Inhaltselement mit der ersten Programminformation assoziiert ist.

Hierbei besteht ein Vorteil darin, dass die zweite Programminformation ein zweites Informationselement umfasst, das mit einem zweiten Inhaltselement assoziiert ist, das seinerseits mit der ersten Programminformation verbunden ist. Die erste Programminformation enthält also vorteilhaft Informationen, die mit dem zweiten Inhaltselement verknüpft sind. Diese Informationen können in einfacher Weise aufgrund der Verknüpfung gefunden werden und zur Ermittlung des zweiten Informationselements genutzt werden.

Geht die Verknüpfung des zweiten Inhaltselements mit der ersten Programminformation damit einher, dass in der ersten Programminformation das zweite Inhaltselement beschreibende Information enthalten ist, dann kann diese zur Ermittlung des zweiten Informationselementes ausgewertet werden. Ist das nicht der Fall, so bedarf es zur Ermittlung des zweiten Informationselements weiterer Information, z.B. aus über eine Bedieneraktion spezifizierten Quellen oder anhand von Bedienereingaben selbst.

Zur Beschreibung der Eigenschaften des zweiten Inhaltselements und des zweiten Informationselements gelten die vorstehend gemachten Aussagen für das erste Inhaltselement bzw. das erste Informationselement.

Eine nächste Ausgestaltung ist es, dass
- die erste Programminformation ein drittes Informationselement aufweist;
- das dritte Informationselement mit einem dritten Inhaltselement assoziiert ist;
- die zweite Programminformation ein viertes Informationselement aufweist;
- das vierte Informationselement anhand des dritten Informationselements ermittelt wird.

Hiermit ist es von Vorteil, dass die zweite Programminformation ein viertes Informationselement umfasst, das sich aus einem dritten Informationselement der ersten Programminformation ermitteln lässt, wobei sich das dritte Informationselement auf ein drittes Inhaltselement bezieht.

Das heißt, dass beispielsweise zu einer Fernsehsendung vorhandene Information, welche in der ersten Programminformation enthalten ist, herangezogen wird zur Erstellung des vierten Informationselementes der zweiten Programminformation. Beispielsweise kann die für ein Programm oder für eine Serie vorhandene beschreibende Information der ersten Programminformation für die Ermittlung eines vierten Informationselements für eine Folge der Serie in der zweiten Programminformation ausgewertet und/oder angepasst werden.

Auch ist es eine Ausgestaltung, dass das vierte Informationselement mit dem dritten Inhaltselement assoziiert ist.

Hierbei ist es vorteilhaft, dass die zweite Programminformation ein viertes Informationselement umfasst, das sich einfach aus dem dritten Informationselement der ersten Programminformation ermitteln lässt, wobei sich das dritte und das vierte Informationselement auf ein identisches drittes Inhaltselement beziehen können.

Ist in der ersten Programminformation z.B. in Form des dritten Informationselements beschreibende Information für ein Fernsehprogramm oder für einen auf Einzelanforderung verfügbaren Spielfilm als drittes Inhaltselement vorhanden, so kann aus dem dritten Informationselement ein viertes Informationselement als Teil der zweiten Programminformation für das zweite System bzw. für zweite und weitere Endgeräte generiert werden. Das vierte Informationselement umfasst somit für das zweite System und weitere Endgeräte geeignete beschreibende Information, welche eben dieses Fernsehprogramm bzw. eben diesen auf Einzelanforderung verfügbaren Spielfilm betreffen kann.

Zur Beschreibung der Eigenschaften des dritten Inhaltselements und des dritten und vierten Informationselements gelten die vorstehend gemachten Aussagen für das erste Inhaltselement bzw. das erste Informationselement.

Die vorstehenden Weiterbildungen sind insbesondere auch für eine Mehrzahl von zweiten und dritten Informationselementen, für eine Mehrzahl von zu diesen assoziierten zweiten und dritten Inhaltselementen und/oder für eine Mehrzahl von vierten Informationselementen entsprechend anwendbar und möglich.

Eine Weiterbildung besteht darin, dass
- die erste Programminformation ein erstes Attribut aufweist,
- die zweite Programminformation ein zweites Attribut aufweist,
- das zweite Attribut anhand des ersten Attributs ermittelt wird.

Erste und zweite Attribute der ersten bzw. zweiten Programminformation können hierbei insbesondere Teile der ersten Programminformation bzw. der zweiten Programminformation sein. Das erste Attribut und/oder das zweite Attribut können jeweils Relevanz über ein einziges Inhaltselement hinaus besitzen. Somit ergibt sich als Vorteil, dass auch als Attribut charakterisierbare Teile der Programminformation automatisch, insbesondere ohne Bedienereingriff, in die Ermittlung der zweiten Programminformation einbezogen werden können.

Eine zusätzliche Ausgestaltung ist es, dass das erste und das zweite Attribut jeweils eine der folgenden Komponenten umfassen:
- eine Kanalinformation
- ein Kanalname
- eine Kanalnummer
- eine Kategorieinformation
- einen Kategorienamen

Hierbei sind insbesondere gleiche Kanalnummer und gleicher Kategorienamen für bestimmte Kanäle bzw. Kategorien vorteilhaft aus Sicht des Benutzers.

So kann das erste Attribut beispielsweise eine erste Kanalnummer, einen ersten Kanalnamen und eine erste Kanalinformation umfassen. Unter Auswahl der ersten Kanalnummer erhält das mindestens eine erste Endgerät eines Benutzers, Teilnehmers oder Abonnenten mit Hilfe des ersten Systems oder eines mit diesem System assoziierten Verteilsystems unter Anwendung der ersten Kanalinformation Zugriff auf einen bestimmten Programmkanal, der den ersten Kanalnamen trägt.

Besteht nun das zweite Attribut beispielsweise ebenfalls aus einer zweiten Kanalnummer, einem zweiten Kanalnamen und einer zweiten Kanalinformation und wird die zweite Kanalnummer als mit der ersten Kanalnummer identische Zahl ermittelt, wird der zweite Kanalname als mit dem ersten Kanalnamen identischer Kanalname ermittelt, und wird die zweite Kanalinformation so ermittelt, dass das mindestens eine zweite oder das mindestens eine weitere Endgerät des Benutzers oder Teilnehmers auf den bestimmten Programmkanal Zugriff hat, so kann der Benutzer oder Teilnehmer den bestimmten Programmkanal mit der gleichen Kanalnummer und unter dem gleichen Kanalnamen auffinden und/oder einschalten. Dies ist vorteilhaft sowohl über das mindestens eine erste Endgerät als auch über das mindestens eine zweite oder das mindestens eine weitere Endgerät möglich.

Die erste Kanalinformation und die zweite Kanalinformation können insbesondere jeweils eine Multicastadresse, eine Frequenzlage oder jede andere Form von Zugriffsinformation sein, die dem jeweiligen Endgerät des Teilnehmers Zugriff auf einen Programmkanal ermöglichen kann.

Eine andere Ausgestaltung ist es, dass die erste Programminformation bereitgestellt wird mittels mindestens einer dritten Nachricht, wobei die dritte Nachricht entsprechend einer Kommunikation zwischen dem ersten System und dem mindestens einen ersten Endgerät ausgestaltet ist.

Hiermit ist es von Vorteil, dass das erste System im Hinblick auf die Ermittlung der zweiten Programminformation die erste Programminformation bereitstellen kann vermittels einer dritten Nachricht, die es auch zur Bereitstellung der ersten Programminformation für erste Endgeräte benutzt.

Insbesondere kann das erste System hierfür vorteilhaft ausschließlich gleiche Nachrichten und Nachrichtenfolgen verwenden, wie sie für erste Endgeräte vorgesehen sind. Es ergibt sich hierdurch eine endgerätegleiche Bereitstellung der ersten Programminformation, wodurch eine Unterstützung einer speziellen Form der Bereitstellung nicht erforderlich wird. Mithin sind keine Anpassungen des ersten Systems des hierin beschriebenen Ansatzes notwendig.

Auch ist es eine Möglichkeit, dass die zweite Programminformation anhand von Transformationsregeln ermittelt wird.

Die Transformationsregeln können hierbei auf unterschiedliche Art bereitgestellt und/oder verändert werden. Beispielsweise können die Transformationsregeln als Regeln oder in Form von Parametern übertragen werden. Auch können Änderungen gegenüber vorhergehenden Transformationsregeln übertragen werden. Alternativ können die Transformationsregeln durch einen Bediener konfiguriert, z.B. erstellt, verändert und/oder gelöscht werden. Eine derartige Konfiguration kann z.B. über einen besonderen Kommunikationskanal oder lokal (z.B. vor Ort) an einer zum Ablauf des Verfahrens geeigneten Datenverarbeitungsanlage durchgeführt werden.

Auch ist es eine weitere Ausgestaltung, dass die erste Programminformation (FEPG) mittels HTTP, mittels XML oder mittels HTTP und XML bereitgestellt wird.

Eine andere Ausgestaltung besteht darin, dass die zweite Programminformation mittels SOAP (Simple Object Access Protocol) bereitgestellt wird.

Die Verwendung der vorstehend genannten Protokolle ist vorteilhaft im Hinblick auf die breite Einsetzbarkeit des hier beschriebenen Ansatzes.

Auch ist es eine Weiterbildung, dass die erste Programminformation von dem ersten System einem Gateway und dem mindestens einem Endgerät bereitgestellt wird.

Bei dem Gateway handelt es sich beispielsweise um eine Komponente des Netzwerks, insbesondere um ein Multimedia Gateway. Das Gateway steht z.B. mittels geeigneter Netzschnittstellen in Kommunikationsbeziehungen mit dem ersten System und dem zweiten System, sowie ggf. mit dem mindestens einen weiteren Endgerät. Eine Kommunikation zwischen dem Gateway und dem mindestens einen weiteren Endgerät kann beispielsweise direkt oder über das zweite System erfolgen. Gegenüber einem ersten Endgerät ergibt sich auf Basis des Gateways insbesondere der Vorteil einer gesteigerten Verarbeitungsleistung.

Die vorstehend genannte Aufgabe wird ebenfalls gelöst von einer Vorrichtung zur Datenverarbeitung umfassend eine Prozessoreinheit und/oder eine zumindest teilweise fest verdrahtete Schaltungsanordnung, die derart eingerichtet ist, dass eines der vorstehend genannten Verfahren durchführbar ist.

Weiterhin wird zur Lösung der Aufgabe ein System, insbesondere Kommunikationssystem, angegeben umfassend eine Vorrichtung wie hierin beschrieben.

Ausführungsbeispiele der Erfindung werden anhand der folgenden Figuren dargestellt:
- Fig.1: zeigt eine Konfiguration mit einem ersten System, einem zweiten System und einem Gateway;
- Fig.2: zeigt eine Konfiguration mit mindestens einem weiteren Endgerät;
- Fig.3: zeigt eine Benachrichtigung eines mindestens einen weiteren Endgeräts über eine SMS Nachricht;
- Fig.4: zeigt eine Transformation eines dritten Informationselements in ein viertes Informationselement;
- Fig.5: zeigt einen Fluss von erster bzw. zweiter Programminformation zu mindestens einer Set Top Box und zu Funktionen zur Bereitstellung der zweiten Programminformation.

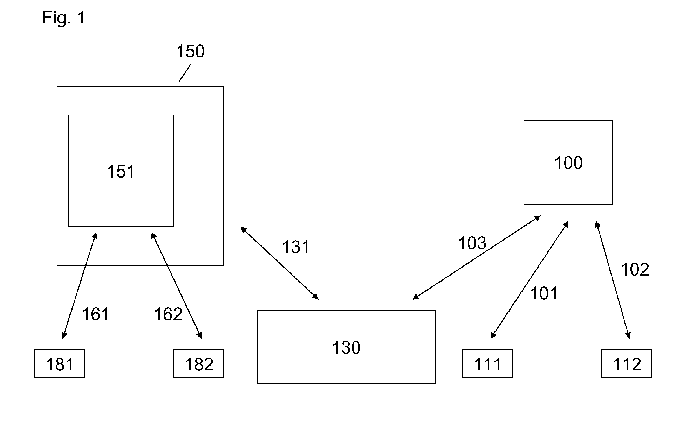

**Fig.1** zeigt eine Konfiguration zur Bereitstellung von Programminformation für Endgeräte mit einem ersten System 100, einem zweiten System 150 und einem Gateway 130. Das erste System 100 umfasst beispielsweise eine Mehrzahl von Servern und ist angebunden an ein paketbasiertes Festnetz, über das es insbesondere sowohl mit IP-basierten ersten Endgeräten des Festnetzes, z. B. Set Top Boxen 111, 112, als auch mit dem Gateway 130 kommunizieren kann. Das erste System 100 wird mit einer ersten oder einer neuen Version eines EPG über eine nicht dargestellte Bediener- oder Netzschnittstelle versorgt. Diese Version soll als erste Programminformation zu einem durch einen Bediener des ersten Systems 100 festgelegten Zeitpunkt verfügbar gemacht werden.

Die erste Programminformation liegt z.B. in Form einer Mehrzahl von Dateien vor, die geeignet sind, von den Set Top Boxen 111, 112 verarbeitet zu werden. Zur Bereitstellung der ersten Programminformation für die Set Top Boxen 111, 112 verwendet das System 100 z.B. ein zweistufiges Verfahren, demgemäß zu einem durch den Bediener des ersten Systems 100 bestimmten Zeitpunkt eine Verfügbarkeitsinformation per Multicast für die Set Top Boxen 111, 112 bereitgestellt wird. Diese Verfügbarkeitsinformation enthält die Information, dass eine erste Programminformation bereit steht. Zusätzlich kann die Verfügbarkeitsinformation eine Version und/oder eine zum Zugriff auf die erste Programminformation notwendige Zugriffsinformation enthalten. Die Zugriffsinformation ist beispielsweise wiederum eine Multicastadresse, unter der die Set Top Boxen 111, 112 die erste Programminformation erhalten können. Die Set Top Boxen 111, 112 können somit mittels der Zugriffsinformation in einem Multicast-Modus mit der ersten Programminformation geladen werden.

Für Fehlerfälle und/oder für einen Hochlauf oder einen Start der Set Top Box 111, 112 zu einem Zeitpunkt nach der Bereitstellung der ersten Programminformation ist alternativ zu dem genannten Weg im ersten System 100 ebenfalls ein auf eine Einzelanforderung der Set Top Box 111, 112 und z.B. über HTTP initiiertes Laden der ersten Programminformation in einem Unicast-Modus möglich.

In gleicher Weise können auch Teile der ersten Programminformation in dem Multicast-Modus und/oder in dem Unicast-Modus in die Set Top Boxen 111, 112 geladen werden. Hierzu kann z.B. eine Datei, welche Teil der ersten Programminformation ist, dem System 100 über die nicht dargestellte Bediener- oder Netzschnittstelle bereitgestellt werden. Dann kann eine weitere Verfügbarkeitsinformation per Multicast für die Set Top Boxen 111, 112 bereitgestellt werden. Aufgrund der weiteren Verfügbarkeitsinformationen erhalten die Set Top Boxen 111, 112 Kenntnis, dass die Datei verfügbar ist. Mittels einer weiteren Zugriffsinformation, welche z. B. Teil der weiteren Verfügbarkeitsinformation sein kann, können die Set Top Boxen 111, 112 von dem System 100 mit der Datei geladen werden.

Das erste System 100 stellt die erste Programminformation der Set Top Box 111 über eine Kommunikationsbeziehung 101 und der Set Top Box 112 über eine Kommunikationsbeziehung 102 bereit. Die Set Top Boxen 111, 112 besitzen vorzugsweise jeweils eine Software für den Zugriff auf Dienste eines Festnetzfernsehens, wobei es die Software insbesondere ermöglicht, dass die Set Top Boxen 111, 112 mit dem ersten System 100 kommunizieren können.

Zur Vermeidung von unberechtigtem Zugriff auf die erste Programminformation sind in dem ersten System 100 die MAC Adressen der Set Top Boxen 111, 112 bekannt. Eine Überprüfung der MAC Adresse geschieht beispielsweise, bevor die Set Top Box 111, 112 auf die Verfügbarkeitsinformation und/oder auf die Zugriffsinformation und/oder auf die vorstehend genannte Multicastadresse zugreifen kann. Eine Überprüfung der MAC Adresse geschieht z. B. ebenfalls vor einem im Unicast angeforderten Einzelladen der ersten Programminformation in die Set Top Box 111, 112.

Das erste System 100 stellt neben der ersten Programminformation auch Steuerungsfunktionen einer auf die erste Programminformation aufsetzenden digitalen TV Lösung zur Verfügung. Hierzu besitzt das erste System 100 eine Verwaltung von Teilnehmerdaten und Inhalten, sowie u. a. Schnittstellen zu TV Streaming Servern, zu VoD Servern, zu Personal Video Recorder Funktionen und/oder zu Verschlüsselungsfunktionen.

Das Gateway 130 erhält die erste Programminformation von dem ersten System 100. Damit das Gateway 130 die erste Pogramminformation zeitnah erhalten kann, lauscht das Gateway 130 permanent oder zyklisch wiederkehrend an der gleichen Multicastadresse wie die Set Top Boxen 111, 112, um die Verfügbarkeitsinformation für die erste Programminformation zu erhalten. Alternativ kann das Gateway 130 auch zyklisch wiederkehrend die Verfügbarkeitsinformation für die erste Programminformation bei dem ersten System 100 abfragen. Vergleichbar einer Set Top Box 111, 112 kann das Gateway 130 aber auch die Bereitstellung der ersten Programminformation verlangen. Das Gateway 130 nutzt hierbei vorzugsweise vergleichbare Nachrichten und/oder Nachrichtenfolgen wie eine Set Top Box 111, 112. Das erste System 100 stellt dem Gateway 130 die erste Programminformation über eine Kommunikationsbeziehung 103 bereit. Zur Identifikation beim ersten System 100 nutzt das Gateway 130 eine eigene MAC Adresse bzw. eine der eigenen MAC Adressen oder ggf. die MSISDN eines weiteren Endgeräts.

Das erste System 100 ist darauf vorbereitet, die erste Programminformation für das Gateway 130 bereitzustellen, indem die eigene MAC Adresse des Gateways 130 bzw. die eine der eigenen MAC Adressen des Gateways 130 im ersten System 100 hinterlegt ist. Dies kann beispielsweise erfolgen, indem eine virtuelle Set Top Box an dem ersten System 100 eingerichtet wird, welche die eigene MAC Adresse des Gateways 130 bzw. die eine der eigenen MAC Adressen des Gateways 130 aufweist. Hierzu ist keine Anpassung der Funktionalität des ersten Systems 100 erforderlich.

Auch das weitere Endgerät kann als eine weitere virtuelle Set Top Box des ersten Systems 100 eingeführt werden. Dies kann beispielsweise erfolgen, indem die weitere virtuelle Set Top Box in dem ersten System 100 so eingerichtet wird, dass die MAC Adresse der weiteren virtuellen Set Top Box als die MSISDN des weiteren Endgeräts definiert wird. Zusätzlich kann im ersten System 100 ein eigener Set Top Boxen Typ für die virtuelle Set Top Box oder die weitere virtuelle Set Top Box eingeführt werden, was im Hinblick auf eine einfache Handhabung durch den Bediener des ersten Systems 100 vorteilhaft ist.

Im Hinblick auf ein einfaches Routing kann eine IP Adresse des Gateways 130 im ersten System 100 fest hinterlegt werden. Auch können die Set Top Box 111, 112 und das weitere Endgerät im ersten System 100 administrativ einem einzigen Teilnehmer zugeordnet werden.

Das Gateway 130 ermittelt eine zweite Programminformation nach Erhalt der ersten Programminformation beispielsweise dadurch, dass eine geeignete Umsetzung der ersten Programminforation durchgeführt wird, und stellt die zweite Programminformation über eine geeignete Kommunikation z.B. auf Basis eines SOAP oder eines FTP dem zweiten System 150 bereit. Hierbei kann eine Übertragung der zweiten Programminformation von dem Gateway 130 zu dem zweiten System 150 von dem Gateway 130 initiiert werden oder auf Anforderung durch das zweite System 150 erfolgen. Das Gateway 130 stellt dem zweiten System 150 die zweite Programminformation über eine Kommunikationsbeziehung 131 bereit.

Das zweite System 150 kann mehrere Servern umfassen und eine Lösung für Mobilfernsehen bereitstellen. Es stellt damit insbesondere zweite Programminformation z.B. in Form eines EPG für zweite Endgeräte, insbesondere für mobile Endgeräte 181, 182 zur Verfügung.

Darüber hinaus kann das zweite System 150 Server für Inhalte, für Streaming und Kodierung umfassen. Das zweite System 150 enthält eine Funktion 151 zur Bereitstellung der zweiten Programminformation für die mobilen Endgeräte 181, 182. In Form der zweiten Programminformation liegt ein für die mobilen Endgeräte 181, 182 geeignetes EPG vor. Die mobilen Endgeräte 181, 182 fordern die zweite Programminformation oder Teile davon von der Funktion 151 im Bedarfsfalle an und erhalten die gewünschte Information. Die Funktion 151 stellt die zweite Programminformation oder Teile davon dem mobilen Endgerät 181 über eine Kommunikationsbeziehung 161 und dem mobilen Endgerät 182 über eine Kommunikationsbeziehung 162 bereit.

Die mobilen Endgeräte 181, 182 können die zweite Programminformation beispielsweise per MBMS, sofern verfügbar, erhalten oder per HTTP auf Anforderung. Die mobilen Endgeräte 181, 182 besitzen jeweils eine Software für den Zugriff auf Dienste des Mobilfernsehens.

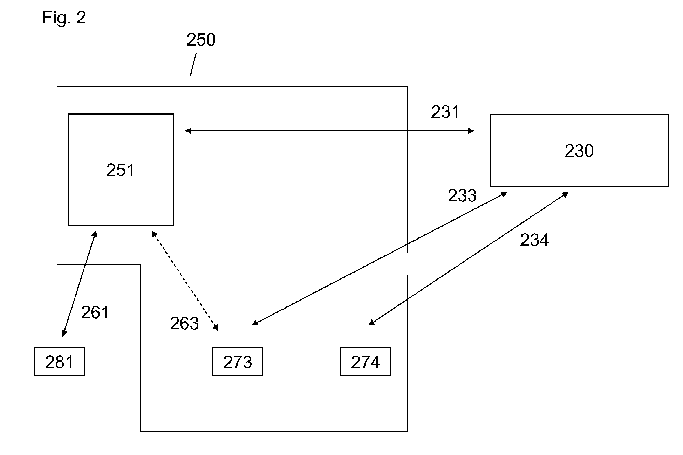

**Fig.2** zeigt eine Konfiguration mit mindestens einem weiteren Endgerät 273, 274. Ein zweites System 250 umfasst hier eine Funktion 251 zur Bereitstellung eines für mobile Endgeräte geeigneten EPG für ein zweites Endgerät 281, welches ein mobiles Endgerät ist. Die Funktion 251 stellt dem zweiten Endgerät 281 das für mobile Endgeräte geeignete EPG über eine Kommunikationsbeziehung 261 bereit. Neben der Funktion 251 umfasst das zweite System 250 die weiteren Endgeräte 273, 274, welche ebenfalls mobile Endgeräte sind. Diese erhalten eine zweite Programminformation direkt von dem Gateway 230. Das Gateway 230 stellt die zweite Programminformation dem weiteren Endgerät 273 über eine Kommunikationsbeziehung 233 und dem weiteren Endgerät 274 über eine Kommunikationsbeziehung 234 bereit. Das Gateway 230 versorgt ebenfalls die Funktion 251 mit der zweiten Programminformation, was über eine Kommunikationsbeziehung 231 erfolgt.

Das weitere Endgerät 273 kann zusätzlich auch von der Funktion 251 das für mobile Endgeräte geeignete EPG erhalten. Die Funktion 251 stellt dem weiteren Endgerät 273 das für mobile Endgeräte geeignete EPG über eine Kommunikationsbeziehung 263 bereit. Das über die Funktion 251 zugreifbare für mobile Endgeräte geeignete EPG kann von der dem Endgerät 273 von dem Gateway 230 bereitgestellten bzw. angeforderten zweiten Programminformation verschieden sein. Zum einen kann eine Bearbeitung der zweiten Programminformation durch die Funktion 251 erfolgen, zum anderen kann die über die Kommunikationsbeziehung 233 zugestellte zweite Programminformation spezifisch für das weitere Endgerät 273 sein. Das weitere Endgerät 273 kann insbesondere sowohl die von der Funktion 251 als auch die von dem Gateway 230 zur Verfügung gestellte Programminformation zugleich beziehen, anfordern und/oder verarbeiten.

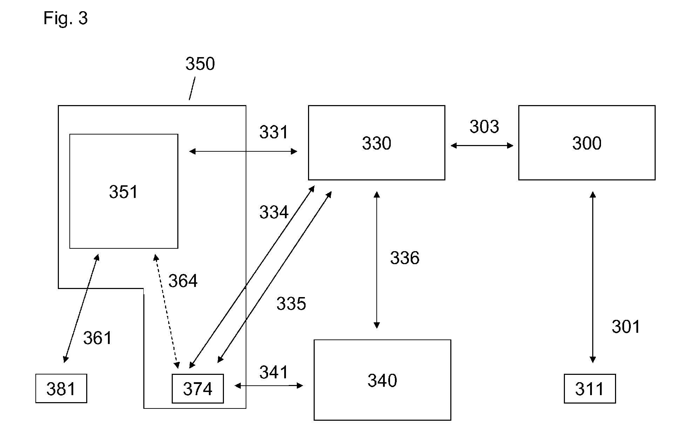

**Fig.3** zeigt eine Benachrichtigung eines mindestens einen weiteren Endgeräts 374 über eine SMS Nachricht 341. Im Vorfeld dieser Benachrichtigung stellt ein erstes System 300 einem ersten Endgerät 311 und einem Gateway 330 eine erste Programminformation zur Verfügung. Das erste System 300 stellt die erste Programminformation dem ersten Endgerät 311 über eine Kommunikationsbeziehung 301 und dem Gateway 330 über eine Kommunikationsbeziehung 303 bereit. Nach Ermittlung einer zweiten Programminformation im Gatewy 330 wird diese einer Funktion 351 und dem weiteren Endgerät 374 zur Verfügung gestellt. Das Gateway 330 stellt die zweite Programminformation der Funktion 351 über eine Kommunikationsbeziehung 331 und dem weiteren Endgerät 374 über eine Kommunikationsbeziehung 334 bereit. Die Funktion 351 stellt die zweite Programminformation in Form eines für ein zweites Endgerät 381 geeigneten EPG bereit. Die Funktion 351 stellt die zweite Programminformation dem zweiten Endgerät 381 über eine Kommunikationsbeziehung 361 bereit.

Nach Zugriff auf an dem weiteren Endgerät 374 verfügbare EPG Information hat der Teilnehmer den Wunsch, vor Beginn einer angekündigten Fernsehsendung rechtzeitig benachrichtigt zu werden. Er wählt hierzu die Fernsehsendung im EPG aus und markiert diese über eine geeignete Bedienaktion, z.B. ein Drücken einer Bedientaste an dem weiteren Endgerät 374. Eine erfolgreiche Markierung führt zu einer auf dem weiteren Endgerät 374 sichtbaren Kennzeichnung der Fernsehsendung in dem EPG. Falls nicht per Voreinstellung oder standardmäßig festgelegt, kann der Teilnehmer einen Zeitpunkt der Benachrichtigung vor Beginn der Sendung festlegen. So kann er beispielsweise einstellen, dass er eine Stunde, 15 Minuten oder 30 Sekunden vor Beginn der gewünschten Fernsehsendung benachrichtigt wird.

Die von dem Teilnehmer vorgenommene Auswahl wird von dem weiteren Endgerät 374 über eine Kommunikationsbeziehung 335 zu dem Gateway 330 übertragen. Alternativ kann die von dem Teilnehmer vorgenommene Auswahl von dem weiteren Endgerät 374 über eine Kommunikationsbeziehung 364 und die Kommunikationsbeziehung 331 zu dem Gateway 330 übertragen werden. Besitzt das erste System 300 eine Funktionalität zur Benachrichtigung des Gateways 330 vor Beginn der angekündigten Fernsehsendung, so kann diese Funktionalität genutzt werden, indem das Gateway 330 die von dem Teilnehmer vorgenommene Auswahl über die Kommunikationsbeziehung 303 zu dem ersten System 300 überträgt und das Gateway 330 über die Kommunikationsbeziehung 303 von dem ersten System 300 bei Erreichen des Zeitpunkts informiert wird. Das Gateway 330 initiiert bei Erreichen des Zeitpunkts eine Erinnerung, indem das Gateway 330 einen Auftrag zur Generierung einer SMS eines durch das Gateway 330 bestimmten Inhalts an ein SMS Gateway 340 sendet. Das Gateway 330 sendet dem SMS Gateway 340 den Auftrag zur Generierung der SMS über eine Kommunikationsbeziehung 336. Mit Erhalt des Auftrags zur Generierung der SMS generiert das SMS Gateway 340 die SMS und versendet diese. Daraufhin trifft die SMS bei dem weiteren Endgerät 374 über eine Kommunikationsbeziehung 341 ein. Der Inhalt der SMS ist ein Hinweis auf die in Kürze beginnende Fernsehsendung. Insbesondere kann die SMS eine Kanalnummer, eine Startzeit und/oder einen Programmnamen enthalten.

Mittels der Kommunikationsbeziehung 335 kann ein einmal generierter Benachrichtigungsauftrag auch geändert oder gelöscht werden. Alternativ kann ein einmal generierter Benachrichtigungsauftrag auch geändert oder gelöscht werden mittels der Kommunikationsbeziehungen 364 und 331. Benachrichtigungsaufträge können auch sowohl für einzelne Folgen einer Fernsehserie als auch für alle Folgen einer Fernsehserie, also die komplette Fernsehserie, generiert werden. Sollte eine Änderung der ermittelten zweiten Programminformation im Rahmen einer z.B. wöchentlichen Aktualisierung der Programminformation mit einem einmal gestellten Benachrichtigungsauftrag kollidieren, so kann das Gateway 330 dem weiteren Endgerät 374 eine entsprechende Information zukommen lassen. Dies kann unter Nutzung der Kommunikationsbeziehung 334 im Rahmen der zweiten Programminformation erfolgen oder per SMS über die Kommunikationsbeziehungen 336 und 341. So kann insbesondere eine SMS Benachrichtigung erfolgen, falls sich der Anfangszeitpunkt der gewünschten Sendung verschoben hat oder die Sendung abgesagt wurde.

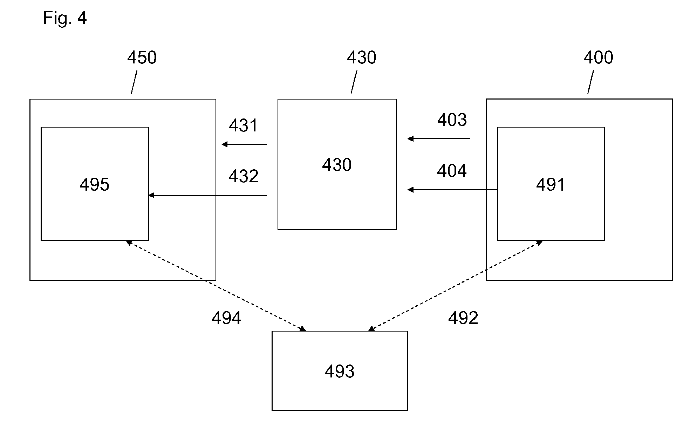

**Fig. 4** zeigt eine Transformation eines dritten Informationselements 491 in ein viertes Informationselement 495, wobei das dritte Informationselement 491 und das vierte Informationselement 495 mit einem dritten Inhaltselement 493 assoziiert sind.

Hierbei umfasst eine erste Programminformation 400 das dritte Informationselement 491, welches mit dem dritten Inhaltselement 493 verknüpft ist oder durch dieses definiert ist. Die Verknüpfung des dritten Informationselements 491 mit dem dritten Inhaltselement 493 ist durch die Beziehung 492 dargestellt. Das dritte Inhaltselement 493 kann beispielsweise ein digitaler Inhalt des Spielfilms "Vom Winde verweht" sein. Das dritte Informationselement 491 enthält dann typischerweise neben dem Titel "Vom Winde verweht" und den Sendedaten (z.B. ein Kanal y, eine Uhrzeit z), auch beschreibende Anteile, z.B. eine Zusammenfassung, eine Liste der Mitwirkenden, Information zur Entstehungsgeschichte, aktuelle Information, exemplarisches Bild- oder Video Material und/oder zugehörige Zugriffsinformation.

Die erste Programminformation 400 wird über eine Kommunikationsbeziehung 403 einem Multimedia Gateway 430 zur Verfügung gestellt. Das Multimedia Gateway 430 ermittelt eine zweite Programminformation 450 und stellt diese über eine Kommunikationsbeziehung 431 bereit. Dem Multimedia Gateway 430 sind hierbei für den Kanal y Konfigurationsinformationen verfügbar, gemäß der z.B. bestimmt ist, dass alle Sendungen des Kanals y auch in der zweiten Programminformation 450 generiert werden müssen, da dieser Kanal mobilen Endgeräten eines Mobilfernsehens angeboten wird, für welches die zweite Programminformation 400 erstellt werden soll. Aufgrund des dritten Informationselements 491 und der Konfigurationsinformationen erstellt das Multimedia Gateway 430 die zweite Programminformation 450 so, dass die zweite Programminformation 450 das vierte Informationselement 495 umfasst. Das vierte Informationselement 4 geht hervor aus dem Informationselement 491, zum Beispiel dadurch, dass nur die 3 ersten Sätze/Zeilen der Zusammenfassung in das vierte Informationselement 495 übernommen werden und ggf. enthaltenes Bild und Video Material oder entsprechende Verknüpfungen gelöscht werden. Diese Ermittlung der zweiten Programminformation 450 unter Ausnutzung der Informationselementstruktur und gewisser Transformationsvorgaben ist durch die Beziehungen 404 und 432 dargestellt. Das entstehende vierte Informationselement 495 ist wiederum mit dem Spielfilm "Vom Winde verweht", also dem dritten Inhaltselement 493, assoziiert, was durch die Beziehung 494 dargestellt ist.

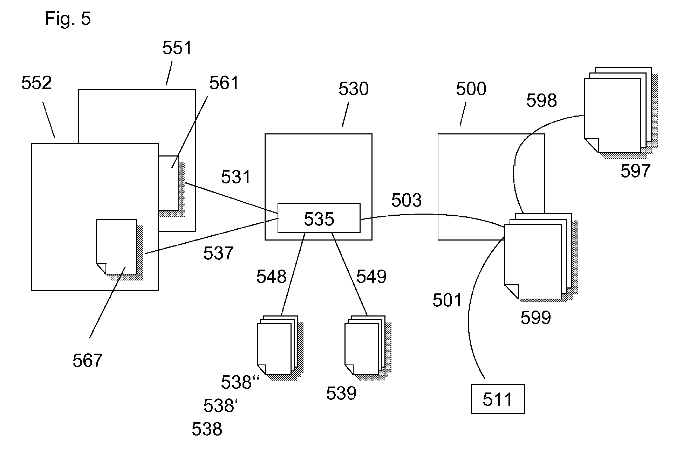

**Fig.5** zeigt einen Fluss von erster bzw. zweiter Programminformation zu mindestens einer Set Top Box 511 und zu Funktionen 561, 567 zur Bereitstellung der zweiten Programminformation.

Hierbei werden einem ersten System 500 EPG Daten 597 zur Verfügung gestellt. Diese EPG Daten 597 umfassen beispielhaft reine Programminformation, welche an die Bedürfnisse des ersten Systems 500 und der mindestens einen Set Top Box 511 angepasst werden muss. Beispielsweise können die EPG Daten 597 in Form einer Kanaltabelle (x.chn), einer Programmtabelle (y.prg) und einer Sendetabelle (z.sch) vorliegen. Hierbei umfasst ein Tabellenelement der Kanaltabelle eine Kanalreferenznummer zur Identifikation eines TV Kanals sowie den auf dem Bildschirm bzw. Display angezeigten Namen des Programmkanals (z.B.Kanal1, Kanal2). Ein Tabellenelement der Programmtabelle enthält u. a. eine Programmreferenznummer, den Titel einer Sendung bzw. den Programmnamen (z.B. Kanal1 Aktuell- Das Wetter), sowie beschreibende Information für das Programm bzw. die Sendung. Ein Tabellenelement der Sendetabelle umfasst eine Kanalreferenznummer, eine Programmreferenznummer, sowie Tag und Anfangszeit einer geplanten Sendung des mit der Programmreferenznummer bezeichneten Programms auf dem mit der Kanalreferenznummer bezeichneten Kanal. In Form der genannten Tabellen werden die EPG Daten 597 dem ersten System 500 über eine Kommunikationsbeziehung 598 geladen oder verfügbar gemacht.

Das erste System 500 generiert aus den EPG Daten 597 und Konfigurationsdaten des Systems 500 eine erste Programminformation 599. Die erste Programminformation 599 wird in einem XML Format erzeugt. Insbesondere können hierbei eine XML basierte DTV Kanaltabelle und ein XML basierter Sendeplan erstellt werden.

Die DTV Kanaltabelle umfasst beispielsweise eine Versionsinformation, eine Kanalliste, eine Kanalidentifikation, eine Kanalreferenznummer, einen Kanaltyp, einen Kanalnamen (z.B. Kanal3), eine Indikation zur Eignung für HDTV Inhalte, eine Information zur Auflösung (z.B.HDTV, SDTV), eine IP Adresse (z.B. Multicast Adresse), eine Portnummer, eine Information hinsichtlich der Zugehörigkeit zu einem Dienstpaket. Der Sendeplan umfasst beispielsweise eine Versionsinformation, eine Programmbeschreibung, eine Kanalinformation und einen vorgesehenen Sendezeitpunkt.

Die erste Programminformation 599 wird in Form der vorstehenden XML Dateien der mindestens einen Set Top Box 511 wie auch einem Gateway 530 bereitgestellt. Das System 500 stellt die erste Programminformation 599 der mindestens einen Set Top Box 511 über eine Kommunikationsbeziehung 501 und dem Gateway 530 über eine Kommunikationsbeziehung 503 bereit. Die erste Programminformation kann erstmalig bereitgestellte Programminformation oder eine Aktualisierung von bereits vorhandener Programminformation sein. Die bereits im Zusammenhang mit Fig.1 aufgezeigten Übertragungsmöglichkeiten können Anwendung finden. Ebenso kann eine zyklische Anforderung des Gateways 530 gerichtet an das erste System 500 erfolgen zur Feststellung, ob zwischenzeitlich eine neue Version mindestens einer der genannten XML Dateien verfügbar ist. Ist das der Fall, dann kann das Gateway 530 das Laden der aktualisierten Dateien von dem System 500 anfordern.

Das Gateway 530 besitzt eine Transformationsfunktion 535 Diese hat Zugriff auf die über die Kommunikationsbeziehung 503 bereitgestellten ersten Programminformationen. Für die Transformationsfunktion 535 sind weiterhin Transformationsregeln 538, 538', 538" und lokale Konfigurationsdaten 539 verfügbar und können dem Gateway 530 beispielsweise durch lokale Eingabe oder über geeignete Schnittstellen zu einem Kommunikationsnetz verfügbar gemacht werden, was durch Kommunikationsbeziehungen 548 und 549 dargestellt ist. Die Konfigurationsdaten 539 können beispielsweise je mindestens eine Sprachinformationen, Kodierungsinformation für Video (z.B. H.263), Kodierungsinformation für Audio (z.B. AMR), Preisinformation, Dienstidentifizierung, physikalische Referenz auf einen Inhalt umfassen. Die Transformationsregeln 538, 538', 538" sind beispielsweise in Form von Template und/oder Stylesheet Dateien hinterlegt oder beschrieben. Somit ist eine übersichtliche, für den Bediener leicht anpassbare Beschreibung gegeben, deren Anwendung ein für ein beliebiges Zielsystem erforderliches Format erlaubt.

Eine Anwendung der Transformationsregeln 538 auf Basis der ersten Programminformation und der Konfigurationsdaten 539 ergibt beispielsweise eine für ein zweites System 552 geeignete zweite Programminformation 567, die dem zweiten System 552 bereitgestellt wird zum Beispiel mittels des SOAP. Der hierfür erforderliche Informationsfluss ist durch eine Kommunikationsbeziehung 537 dargestellt.

Neben dem zweiten System 552, welches beispielsweise Mobilfernsehen ermöglicht, kann ein weiteres System 551 vorgesehen sein, welches beispielsweise ein Multimediaprogrammangebot für PC-basierte Endgeräte oder auch ein weiteres IPTV basiertes Programmangebot für Set Top Boxen bereitstellt. Die Anwendung der Transformationsregeln 538' auf Basis der ersten Programminformation und der Konfigurationsdaten 539 ergibt beispielsweise eine für das weitere System 551 geeignete zweite Programminformation 561, die dem weiteren System 551 bereitgestellt wird. Der hierfür erforderliche Informationsfluss ist durch eine Kommunikationsbeziehung 531 dargestellt.

In gleicher Weise ist es ebenfalls möglich, dem mindestens einen weiteren Teilnehmer (nicht dargestellt in Fig. 5) ein spezifisches Format der zweiten Programminformation zu erzeugen und bereitzustellen unter Verwendung der weiteren Transformationsregeln 538".

Die jeweilige für ein Zielsystem bzw. ein Endgerät erzeugte zweite Programminformation kann im jeweils geeigneten Zielformat pro Sendung mindestens eine Programmreferenz, einen Titel, einen Startzeitpunkt und eine Längen- und/oder eine Endzeitpunktinformation umfassen.

### Abkürzungsverzeichnis

- AMR: Adaptive Multirate
- CGW: Convergence Gateway
- DSL: Digital Subscriber Line
- DTV: Digital Television
- DVB: Digital Video Broadcasting
- DVB-H: Digital Video Broadcasting- Handhelds
- EPG: Electronic Program Guide
- FTP: File Transfer Protocol
- GW: Gateway
- HDTV: High Definition Television
- HTTP: Hypertext Transfer Protocol
- IP: Internet Protocol
- IPTV: Internet Protocol Television
- MAC: Media Access Control
- MBMS: Multimedia Broadcast Multicast Service
- MMS: Multimedia Messaging Service
- PC: Personal Computer
- PVR: Personal Video Recorder
- SDTV: Standard Definition Television
- SMS: Short Messaging Service
- SOAP: Simple Object Access Protocol
- STB: Set Top Box
- TV: Television, Fernsehen, Fernsehgerät
- UMTS: Universal Mobile Telecommunications System
- VoD: Video on Demand
- XML: Extensible Markup Language

## Patentansprüche

1. Verfahren zur Datenverarbeitung,
- bei dem ein erstes System eine erste Programminformation bereitstellt,
- bei dem die erste Programminformation auch für mindestens ein erstes Endgerät bereitgestellt wird,
- bei dem die erste Programminformation von dem ersten System einem Gateway und dem mindestens einen Endgerät bereitgestellt wird,
- bei dem die erste Programminformation anhand einer ersten Kennung bereitgestellt wird,
- bei dem die erste Kennung zur Identifikation des Gateways benutzt wird,
- bei dem eine zweite Programminformation anhand der ersten Programminformation ermittelt wird,
- bei dem die zweite Programminformation für ein zweites System bereitgestellt wird,
- wobei das zweite System mindestens eine Funktion zur Bereitstellung der zweiten Programminformation für mindestens ein zweites Endgerät aufweist.

2. Verfahren nach Anspruch 1,
bei dem die zweite Programminformation mindestens einem weiteren Endgerät bereitgestellt wird, wobei das zweite System das mindestens eine weitere Endgerät umfasst.

3. Verfahren nach Anspruch 2,
bei dem eine zweite Kennung von dem mindestens einen weiteren Endgerät bereitgestellt wird.

4. Verfahren nach Anspruch 2 oder Anspruch 3,
bei dem die zweite Programminformation mittels spezifischer Regeln für das mindestens eine weitere Endgerät ermittelt wird, wobei die spezifischen Regeln insbesondere vorgegeben, konfiguriert und/oder mittels Nachrichtenaustauschs mit dem mindestens einen weiteren Endgerät festgelegt, generiert, gelöscht oder verändert werden.

5. Verfahren nach einem der Ansprüche 2, 3 oder 4,
- bei dem eine erste Nachricht des mindestens einen weiteren Endgeräts empfangen wird;
- bei dem ein erstes Informationselement der zweiten Programminformation aufgrund des Erhalts der ersten Nachricht markiert wird;
- bei dem das erste Informationselement mit einem ersten Inhaltselement assoziiert ist;
- bei dem das erste Inhaltselement mit einem Zeitpunkt assoziiert ist;
- bei dem eine zweite Nachricht an das mindestens eine weitere Endgerät übertragen wird bei Erreichen des Zeitpunkts oder bei Annäherung an den Zeitpunkt.

6. Verfahren nach einem der vorhergehenden Ansprüche, bei dem die erste Kennung von dem mindestens einen ersten Endgerät oder von dem Gateway dem ersten System bereitgestellt wird.

7. Verfahren nach einem der vorhergehenden Ansprüche,
- bei dem die zweite Programminformation ermittelt wird, indem mindestens ein zweites Informationselement der zweiten Programminformation ermittelt wird,
wobei das mindestens eine zweite Informationselement mit einem zweiten Inhaltselement assoziiert ist, wobei das zweite Inhaltselement mit der ersten Programminformation assoziiert ist.

8. Verfahren nach einem der vorhergehenden Ansprüche,
- bei dem die erste Programminformation ein drittes Informationselement aufweist;
- bei dem das dritte Informationselement mit einem dritten Inhaltselement assoziiert ist;
- bei dem die zweite Programminformation ein viertes Informationselement aufweist;
- bei dem das vierte Informationselement anhand des dritten Informationselements ermittelt wird.

9. Verfahren nach einem der vorhergehenden Ansprüche,
- bei dem die erste Programminformation ein erstes Attribut aufweist,
- bei dem die zweite Programminformation ein zweites Attribut aufweist,
- bei dem das zweite Attribut anhand des ersten Attributs ermittelt wird.

10. Verfahren nach einem der vorhergehenden Ansprüche, bei dem die erste Programminformation bereitgestellt wird mittels mindestens einer dritten Nachricht, wobei die dritte Nachricht entsprechend einer Kommunikation zwischen dem ersten System und dem mindestens einen ersten Endgerät ausgestaltet ist.

11. Verfahren nach einem der vorhergehenden Ansprüche, bei dem die zweite Programminformation anhand von Transformationsregeln ermittelt wird.

12. Verfahren nach einem der vorhergehenden Ansprüche, bei dem die erste Programminformation mittels HTTP, mittels XML oder mittels HTTP und XML bereitgestellt wird.

13. Verfahren nach einem der vorhergehenden Ansprüche, bei dem die erste Kennung zur Identifikation eines Teilnehmers an dem mindestens einen ersten Endgerät und /oder zur Identifikation des mindestens einen ersten Endgeräts benutzt wird.

14. Vorrichtung zur Datenverarbeitung umfassend eine Prozessoreinheit und/oder eine zumindest teilweise fest verdrahtete Schaltungsanordnung, die derart eingerichtet ist, dass das Verfahren nach einem der vorhergehenden Ansprüchen durchführbar ist.

15. System, insbesondere Kommunikationssystem, umfassend die Vorrichtung gemäß Anspruch 14, ferner umfassend:
- ein erstes System umfassend Mittel zur Bereitstellung einer ersten Programminformation, wobei die erste Programminformation einem Gateway und mindestens einem ersten Endgerät bereitstellbar ist,
- das Gateway umfassend Mittel zur Ermittlung einer zweiten Programminformation anhand der ersten Programminformation und Mittel zur Bereitstellung der zweiten Programminformation für ein zweites System;
- das zweite System umfassend mindestens eine Funktion zur Bereitstellung der zweiten Programminformation für mindestens ein zweites Endgerät.

## Claims

1. Method for data processing
- wherein a first system provides first program information,
- wherein the first program information is also provided for at least one first terminal,
- wherein the first program information is provided by the first system to a gateway and to the at least one terminal,
- wherein the first program information is provided on the basis of a first identifier,
- wherein the first identifier is used for identifying the gateway,
- wherein a second program information is determined on the basis of the first program information,
- wherein the second program information is provided for a second system,
- wherein the second system has at least one function for providing the second program information for at least one second terminal.

2. Method according to Claim 1,
wherein the second program information is provided to at least one further terminal, wherein the second system comprises the at least one further terminal.

3. Method according to Claim 2,
wherein a second identifier is provided by the at least one further terminal.

4. Method according to Claim 2 or Claim 3,
wherein the second program information is determined by means of specific rules for the at least one further terminal, wherein the specific rules are in particular predefined, configured and/or, defined, generated, erased or altered by means of message exchange with the at least one further terminal.

5. Method according to any of Claims 2, 3 or 4,
- wherein a first message of the at least one further terminal is received;
- wherein a first information element of the second program information is marked on account of the receipt of the first message;
- wherein the first information element is associated with a first content element;
- wherein the first content element is associated with a point in time;
- wherein a second message is transmitted to the at least one further terminal upon the point in time being reached or upon the point in time being approached.

6. Method according to any of the preceding claims,
wherein the first identifier is provided to the first system by the at least one first terminal or by the gateway.

7. Method according to any of the preceding claims,
- wherein the second program information is determined by at least one second information element of the second program information being determined,
wherein the at least one second information element is associated with a second content element,
wherein the second content element is associated with the first program information.

8. Method according to any of the preceding claims,
- wherein the first program information has a third information element;
- wherein the third information element is associated with a third content element;
- wherein the second program information has a fourth information element;
- wherein the fourth information element is determined on the basis of the third information element.

9. Method according to any of the preceding claims,
- wherein the first program information has a first attribute,
- wherein the second program information has a second attribute,
- wherein the second attribute is determined on the basis of the first attribute.

10. Method according to any of the preceding claims,
wherein the first program information is provided by means of at least one third message, wherein the third message is configured in accordance with a communication between the first system and the at least one first terminal.

11. Method according to any of the preceding claims,
wherein the second program information is determined on the basis of transformation rules.

12. Method according to any of the preceding claims,
wherein the first program information is provided by means of HTTP, by means of XML or by means of HTTP and XML.

13. Method according to any of the preceding claims,
wherein the first identifier is used for identifying a subscriber at the at least one first terminal and/or for identifying the at least one first terminal.

14. Device for data processing comprising a processor unit and/or an at least partly hardwired circuit arrangement, which is designed in such a way that the method according to any of the preceding claims can be carried out.

15. System, in particular a communication system, comprising the device according to Claim 14, furthermore comprising:
- a first system comprising means for providing first program information, wherein the first program information is provideable to a gateway and to at least one first terminal,
- the gateway comprising means for determining second program information on the basis of the first program information and means for providing the second program information for a second system;
- the second system comprising at least one function for providing the second program information for at least one second terminal.

## Revendications

1. Procédé de traitement de données, selon lequel :
- un premier système met à disposition une première information de programme ;
- la première information de programme est également mise à disposition pour au moins un premier terminal ;
- la première information de programme est mise à disposition par le premier système pour une passerelle et pour l'au moins un terminal ;
- la première information de programme est mise à disposition à l'aide d'un premier identifiant ;
- le premier identifiant est utilisé pour identifier la passerelle ;
- une deuxième information de programme est déterminée à l'aide de la première information de programme ;
- la deuxième information de programme est mise à disposition pour un deuxième système ;
- le deuxième système comportant au moins une fonction de mise à disposition de la deuxième information de programme pour au moins un deuxième terminal.

2. Procédé selon la revendication 1, selon lequel la deuxième information de programme est mise à disposition pour au moins un autre terminal, le deuxième système comprenant l'au moins un autre terminal.

3. Procédé selon la revendication 2, selon lequel un deuxième identifiant est mis à disposition par l'au moins un autre terminal.

4. Procédé selon la revendication 2 ou la revendication 3, selon lequel la deuxième information de programme est déterminée au moyen de règles spécifiques pour l'au moins un autre terminal, les règles spécifiques étant notamment spécifiées, configurées et/ou déterminées, générées, effacées ou modifiées au moyen d'un échange de messages avec l'au moins un autre terminal.

5. Procédé selon l'une des revendications 2, 3 ou 4, selon lequel :
- un premier message de l'au moins un autre terminal est reçu ;
- un premier élément d'information de la deuxième information de programme est marqué en raison de la réception du premier message ;
- le premier élément d'information est associé à un premier élément de contenu ;
- le premier élément de contenu est associé à un instant ;
- un deuxième message est transmis à l'au moins un autre terminal à l'atteinte de l'instant ou à l'approche de l'instant.

6. Procédé selon l'une des revendications précédentes, selon lequel le premier identifiant est mis à disposition pour le premier système par l'au moins un premier terminal ou par la passerelle.

7. Procédé selon l'une des revendications précédentes, selon lequel la deuxième information de programme est déterminée par détermination d'au moins un deuxième élément d'information de la deuxième information de programme, l'au moins un deuxième élément d'information étant associé à un deuxième élément de contenu, le deuxième élément de contenu étant associé à la première information de programme.

8. Procédé selon l'une des revendications précédentes, selon lequel :
- la première information de programme comporte un troisième élément d'information ;
- le troisième élément d'information est associé à un troisième élément de contenu ;
- la deuxième information de programme comporte un quatrième élément d'information ;
- le quatrième élément d'information est déterminé à l'aide du troisième élément d'information.

9. Procédé selon l'une des revendications précédentes, selon lequel :
- la première information de programme comporte un premier attribut ;
- la deuxième information de programme comporte un deuxième attribut ;
- le deuxième attribut est déterminé à l'aide du premier attribut.

10. Procédé selon l'une des revendications précédentes, selon lequel la première information de programme est mise à disposition au moyen d'au moins un troisième message, le troisième message étant configuré conformément à une communication entre le premier système et l'au moins un premier terminal.

11. Procédé selon l'une des revendications précédentes, selon lequel la deuxième information de programme est déterminée à l'aide de règles de transformation.

12. Procédé selon l'une des revendications précédentes, selon lequel la première information de programme est mise à disposition au moyen du HTTP, au moyen du XML ou au moyen du HTTP et du XML.

13. Procédé selon l'une des revendications précédentes, selon lequel le premier identifiant est utilisé pour identifier un usager au niveau de l'au moins un premier terminal et/ou pour identifier l'au moins un premier terminal.

14. Dispositif de traitement de données comprenant une unité de processeur et/ou un circuit câblé à demeure au moins en partie et aménagé de telle sorte que le procédé selon l'une des revendications précédentes peut être exécuté.

15. Système, en particulier système de communication, comprenant le dispositif selon la revendication 14, et comprenant en outre :
- un premier système comprenant des moyens de mise à disposition d'une première information de programme, la première information de programme pouvant être mise à disposition pour une passerelle et au moins un premier terminal ;
- la passerelle comprenant des moyens pour déterminer une deuxième information de programme à l'aide de la première information de programme et des moyens pour mettre à disposition la deuxième information de programme pour un deuxième système ;
- le deuxième système comprenant au moins une fonction de mise à disposition de la deuxième information de programme pour au moins un deuxième terminal.
